# EUROPÄISCHE PATENTSCHRIFT

(11) **EP 1 561 093 B1**
(45) Veröffentlichungstag und Bekanntmachung des Hinweises auf die Patenterteilung: **08.08.2007**
(21) Anmeldenummer: 03775300.1
(22) Anmeldetag: 05.11.2003
(51) Int. Cl.: G01N 1/42, B01L 9/00

(54) **TRÄGER FÜR EINE PROBENKAMMER, INSBESONDERE ZUR KRYOKONSERVIERUNG BIOLOGISCHER PROBEN**
CARRIER FOR A SAMPLE CHAMBER, ESPECIALLY FOR THE CRYOPRESERVATION OF BIOLOGICAL SAMPLES
SUPPORT POUR UNE CHAMBRE A ECHANTILLONS, SERVANT NOTAMMENT A LA CRYOCONSERVATION D'ECHANTILLONS BIOLOGIQUES

(30) Priorität: 06.11.2002 DE 10251722
(43) Veröffentlichungstag der Anmeldung: 10.08.2005
(73) Patentinhaber: Fraunhofer-Gesellschaft zur Förderung der angewandten Forschung e.V., 80686 München (DE)
(72) Erfinder: FUHR, Günter, 13187 Berlin (DE); ZIMMERMANN, Heiko, 61476 Kronberg im Taunus (DE)
(74) Vertreter: Hertz, Oliver
(86) Internationale Anmeldenummer: PCT/EP2003/012356
(87) Internationale Veröffentlichungsnummer: WO 2004/042368

(56) Entgegenhaltungen:
- EP-A- 0 411 224
- WO-A-02/46719
- GB-A- 2 022 452
- US-A- 5 415 282

## Beschreibung

Die Erfindung betrifft einen Träger für mindestens eine Probenkammer zur Tieftemperaturspeicherung (oder: Kryospeicherung, Kryokonservierung) von biologischen Suspensionsproben, eine Kryospeichervorrichtung für suspendierte biologische Zellen, Zellgruppen oder Zellbestandteile, und Verfahren zur Kryospeicherung.

Die Kryospeicherung biologischer Proben besitzt zahlreiche Anwendungen, die auf eine andauernde Lagerung der Proben unter Erhaltung von deren Vitalitätszustand gerichtet sind. Die hierzu verwendeten Vorrichtungen sind an die jeweiligen Proben und die Anforderungen bei der Probenhandhabung angepasst. Bei tiefen Temperaturen können beispielsweise in der Transplantationsmedizin Organe oder in der Transfusionsmedizin Blutspenden gelagert werden. Bei diesen herkömmlichen Anwendungen der Kryospeicherung geht es in der Regel darum, möglichst große Probenvolumen auf möglichst engem Raum anzuordnen. Beispielsweise werden Blutspenden in Blutbeuteln aufbewahrt, die sich in einer Blutbank dicht packen lassen. Die Blutbeutel sind mit einer Markierung (z. B. Strichcode) versehen, um eine gezielte und fehlerfreie Entnahme aus der Blutbank zu ermöglichen. Diese Techniken sind auf die Anwendung mit relativ großen Proben (ml- bis 1-Bereich) beschränkt.

In der Zellbiologie und zunehmend in der molekularen Biotechnologie besteht jedoch die Aufgabe, kleinste biologische Proben (Einzelzellen, Zellgruppen oder Zellbestandteile) im tiefgefrorenen Zustand zu speichern und ggf. zu bearbeiten. Beispielsweise in EP 804 073 wird die Kryobearbeitung von einzelnen Zellen beschrieben. Zellen werden tiefgekühlt auf einem Substrat fixiert, gelagert und ggf. bearbeitet. Diese Technik besitzt den Nachteil, dass die Lagerung der auf Substraten fixierten Zellen relativ platzaufwendig sein kann, so dass der Aufbau einer Kryo-Zellbank erschwert ist. Des Weiteren müssen zur Vermeidung von Kontaminationen die Proben mit einer Schutzschicht versehen werden, was die Handhabung der Proben erschwert.

In DE 199 21 236 ist beschrieben, tropfenförmige Suspensionsproben zur Kryokonservierung auf strukturierten Substraten abzulegen, mit denen die Handhabbarkeit der gefrorenen Proben erleichtert wird. Die strukturierten Substrate können jedoch Nachteile in Bezug auf die Probenbeschickung und die Probenentnahme besitzen. Zur Probenbeschickung müssen alle Probenaufnahmen mit einer Dispensiervorrichtung befüllt werden, deren Betrieb sehr aufwendig sein kann. Zur Probenentnahme muss der in einer Probenaufnahme gespeicherte Tropfen vollständig aufgetaut werden, auch wenn nur ein Teil des Tropfens benötigt wird.

Alternativ zur Probenablage auf Substraten ist die Verwendung von Kryo-Probenkammern (z. B. in Form von Kapillaren oder dünnwandigen Rohren) bekannt. Die Probenkammern bilden ein zumindest teilweise abgeschlossenes Behältnis und bieten daher einen verbesserten Schutz für die Proben. Ein genereller Nachteil der Kryo-Probenkammern ist jedoch, dass ein zwischenzeitliches, ggf. unbeabsichtigtes Auftauen der Probe in der Kryokammer nicht festgestellt werden kann. Die miniaturisierten Probenkammern oder die in ihnen befindlichen Proben zeigen beim Auftauen keine wesentliche Formänderung, wie dies bspw. bei einem Blutbeutel in einer Blutbank der Fall wäre. Die Qualität der Kryokonservierung in Probenkammern kann daher in der Regel nur mit aufwendigen technischen Hilfsmitteln überwacht werden.

Aus WO 02/46719 ist eine Kryospeichervorrichtung mit mindestens einer schlauch- oder kissenförmigen Probenkammer bekannt, die an einem Datenspeicher befestigt ist. Die Befestigung kann insbesondere mit einem Halterahmen auf einer Verkapselung des Datenspeichers erfolgen. Eine schematische, vergrößerte Seitenansicht eines herkömmlich verwendeten Halterahmens (z. B. gemäß WO 02/46719) ist in Figur 14 gezeigt. Der Halterahmen 20' bildet einen Träger 10' für schlauchförmige Probenkammern 11' mit kreisrundem Querschnitt, die in Aufnahmeelementen 21' gehaltert werden. Die Aufnahmeelemente 21' sind als Durchgangslöcher mit ebenfalls kreisförmigem Querschnitt im Halterahmen 2.0' gebildet. Mit diesem Aufbau können die Probenkammern 11' zwar leicht in die Halterahmen 20' eingefädelt werden. Nachteilig ist jedoch die geringe Stabilität der Halterung. Die Probenkammern können im Halterahmen rutschen oder durchhängen. Zur Fixierung müssen gesonderte Vorkehrungen getroffen werden. Des weiteren ist es erforderlich, die Probenkammern an ihren freien Enden zu verschließen. Kapillarförmige Probenkammern für die Kryospeicherung werden auch in WO 99/20104 beschrieben. Die Probenkammern sind auf einen Kühlkörper aufgelegt, wobei sich die gleichen Nachteile wie bei der Technik gemäß WO 02/46719 ergeben.

Die Aufgabe der Erfindung ist es, eine verbesserte Kryospeichervorrichtung bereitzustellen, mit der die Nachteile herkömmlicher Kryospeichervorrichtungen überwunden werden und die insbesondere eine stabile und zuverlässige Halterung von Probenkammern (z. B. für eine Vielzahl suspendierter Zellen, Zellgruppen oder Zellbestandteile) und eine selektive, teilweise Entnahme von Probenbestandteilen ermöglichen soll. Die Aufgabe der Erfindung ist es auch, ein verbessertes Verfahren zur Kryospeicherung anzugeben.

Diese Aufgaben werden durch Vorrichtungen und Verfahren mit den Merkmalen gemäß den Patentansprüchen 1, 13 oder 15 gelöst. Vorteilhafte Ausführungsformen und Anwendungen der Erfindung ergeben sich aus den abhängigen Ansprüchen.

Eine Grundidee der Erfindung ist es, einen Träger für mindestens eine Probenkammer in Form eines Halterahmens bereitzustellen, der mindestens zwei, sich im zusammengesetzten Zustand seitlich berührende Rahmenteile aufweist, zwischen denen eine eingesetzte Probenkammer relativ zum Halterahmen unbeweglich fixierbar ist. Die Rahmenteile können mit Verbindungselementen entlang ihren Seitenflächen lösbar zusammengesetzt werden. Vorteilhafterweise wird damit ein stabiles Aufspannen von vorzugsweise schlauch-, halm-, rohr- oder kapillarförmigen Probenkammern im Halterahmen ermöglicht. Durch ein Einklemmen der Probenkammern können deren Enden automatisch verschlossen werden.

Durch eine Profilierung an mindestens einer der Seitenflächen werden Aufnahmeelemente gebildet, die im zusammengesetzten Zustand der Rahmenteile einen minimalen Freiraum zur Aufnahme des Wandmaterials der Probenkammer, z. B. in Form eines Schlitzes, lassen. Gemäß einer ersten Ausführungsform der Erfindung ist eine der sich berührenden Seitenflächen der-Rahmenteile eben, während die andere Seitenfläche die Profilierung zur Bildung der Aufnahmeelemente aufweist. Diese Gestaltung kann Vorteile in Bezug auf einem vereinfachten Aufbau des Halterahmens besitzen. Alternativ weisen beide Seitenflächen zueinander ausgerichtete Ausnehmungen auf, die im zusammengesetzten Zustand der Rahmenteile die Aufnahmeelemente bilden. Diese Gestaltung kann für ein fehlerfreies Zusammensetzen der Rahmenteile von Vorteil sein.

Wenn der Träger so gebildet ist, dass die Durchgangslöcher einen ovalen oder schlitzförmigen Querschnitt besitzen, kann die eingesetzte Probenkammer, die in der Regel einen kreisrunden Querschnitt besitzt, zusammengedrückt oder zusammengequetscht werden. Durch die Verformung der Probenkammer an den Aufnahmeelementen werden verjüngte Kammerbereiche gebildet, die Sollbruchstellen zur vereinfachten Entnahme von Probenabschnitten darstellen. Vorteilhafterweise kann die Einhaltung von Kryobedingungen für selektiv entnommene Kammerabschnitte einfach dadurch überwacht werden, dass die zusammengedrückten Enden der Probenkammerabschnitte bei einem zwischenzeitlichen, ggf. unbeabsichtigten Auftauen sich deformieren würden.

Der erfindungsgemäß verwendete Halterahmen besteht vorzugsweise aus Kunststoff, der bei Raumtemperatur elastisch deformierbar ist, z. B. aus PE, TPX, Polysulfon. Die Elastizität des Rahmenmaterials kann ebenfalls das Zusammensetzen der Rahmenteile mit der mindestens einen Probenkammer vereinfachen.

Gemäß einer weiteren vorteilhaften Gestaltung sind die Rahmenteile mit Verbindungselementen ausgestattet, mit denen die Rahmenteile entlang der profilierten Seitenflächen lösbar miteinander verbunden werden können. Die Verbindungselemente bieten den Vorteil, dass die Rahmenteile ohne zusätzliche Justierhilfen zusammengefügt werden können und im zusammengesetzten Zustand ein autarkes Bauteil bilden. Werden die Verbindungselemente durch Kombinationen aus Stegen und Nuten, ggf. mit Einrastprofilen, gebildet, so kann die Probenkammer am Aufnahmeelement vorteilhafterweise zusätzlich geknickt werden.

Wenn gemäß einer weiteren Ausführungsform der Erfindung mindestens eines der Rahmenteile,Spannstifte an einander entgegengesetzt liegenden Seitenflächen aufweist, können sich Vorteile für die Anbringung der Probenkammern am Halterahmen ergeben. Die Spannstifte können insbesondere durch die Verbindungselemente zwischen den Rahmenteilen gebildet werden.

Weitere Vorteile für die Handhabung des Trägers können sich ergeben, wenn beide Rahmenteile an einer Seite verschwenkbar miteinander verbunden sind. Die Schwenkverbindung umfasst bspw. eine Scharnier oder eine umschlagbare Lasche.

Gemäß einer besonders bevorzugten Ausführungsform der Erfindung ist der Halterahmen mit einer Datenspeichereinrichtung mit mindestens einem Datenspeicher verbunden. Dies ermöglicht die Ablage von Daten, die die Proben in den Probenkammern charakterisieren.

Ein weiterer Gegenstand der Erfindung ist eine Kryospeichervorrichtung, die mindestens einen erfindungsgemäßen Träger und mindestens eine Probenkammer aus einem flexiblen, elastisch deformierbaren Material umfasst. Als Probenkammern werden vorzugsweise langgestreckte, halmartige oder hohlzylinderförmige Probenkammern (z. B. als Schlauch, Rohr oder Kapillare gebildet) verwendet.

Durch die Verwendung von mindestens einer langgestreckten Probenkammer werden eine Reihe von Vorteilen erzielt, die sich bei der Probenbeschickung, der Überwachung des kryogespeicherten Zustands und der Entnahme von Proben auswirken. So können erfindungsgemäß verwendete Probenkammern schnell befüllt oder geleert werden. Der Flüssigkeitstransport in der Probenkammer kann unter der Wirkung von Kapillarkräften oder eines äußeren Über- oder Unterdruckes erfolgen. Die Probenkammern sind miniaturisierbar und flexibel an die Einsatzbedingungen anzupassen. Die Einlassenden einer Vielzahl von gleichzeitig verwendeten Probenkammern können problemlos an beliebige Anordnungen von Probenreservoiren angepasst werden, aus denen Proben entnommen werden sollen. Die Probenkammern ermöglichen einen Abschluss der Proben gegenüber der Umgebung. Eine Kontamination aus der umgebenden Gas- oder Flüssigkeitsphase (z. B. aus einem Kühlmedium) ist ausgeschlossen. Aus einer erfindungsgemäß vorgesehenen Probenkammer können Proben durch Auftauen der gesamten Probenkammer oder Teilproben durch mechanisches Abtrennen vorzugsweise unmittelbar an die Aufnahmeelemente des Halterahmens angrenzend entnommen werden, ohne dass die gesamte Probenkammer aufgetaut wird. Das mechanische Abtrennen kann sogar unter Wirkung einer lokalen Erwärmung erfolgen, ohne dass ein Verlust der in der übrigen Probenkammer vorgesehenen Probe entsteht.

Ein Gegenstand der Erfindung ist auch ein Verfahren zur Kryospeicherung von Suspensionsproben, bei dem diese unter der Wirkung von Kapillar- oder äußeren Druckkräften in mindestens eine Probenkammer aus flexiblem, elastisch deformierbarem Material aufgenommen, die Probenkammer in dem erfindungsgemäßen Träger festgeklemmt und mit diesem in einen kryokonservierten Zustand überführt werden. Die erfindungsgemäße Kryospeicherung erfolgt allgemein bei einer Temperatur unterhalb der Raumtemperatur, bei der eine vitalitätserhaltende, andauernde Lagerung der Proben möglich ist. Die gewählte Temperatur und die Dauer der Lagerung sind anwendungsabhängig gewählt. Besonders vorteilhaft ist die Erfindung bei Tieftemperaturlagerungen bei Temperaturen unterhalb von minus 100 °Celsius und insbesondere bei der Temperatur von flüssigem Stickstoff, umsetzbar.

Weitere Vorteile und Einzelheiten der Erfindung werden aus der folgenden Beschreibung der beigefügten Zeichnungen ersichtlich.

Es zeigen:
- Fign. 1 bis 8:: verschiedene Ausführungsformen erfindungsgemäßer Träger für Probenkammern,
- Fig. 9:: eine Illustration der Beschickung des erfindungsgemäßen Trägers mit Probenkammern und der Entnahme von Kammerabschnitten,
- Fign. 11 und 12:: schematische Ansichten weiterer Ausführungsformen erfindungsgemäßer Träger für Probenkammern,
- Fign. 13:: eine weitere Illustration zur Handhabung einer erfindungsgemäßen Kryospeichervorrichtung, und
- Fig. 14:: eine schematische Seitenansicht eines herkömmlichen Halterahmens (Stand der Technik).

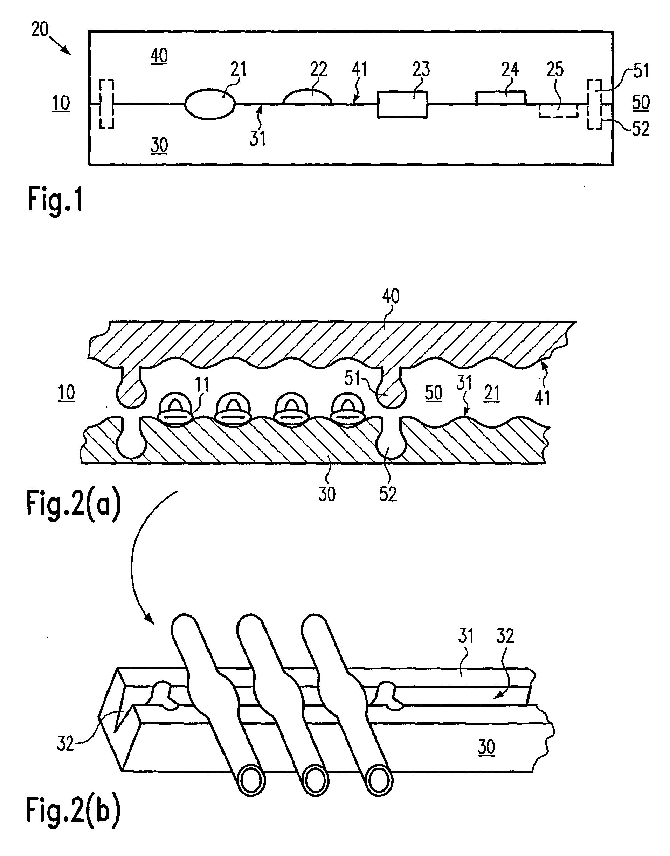

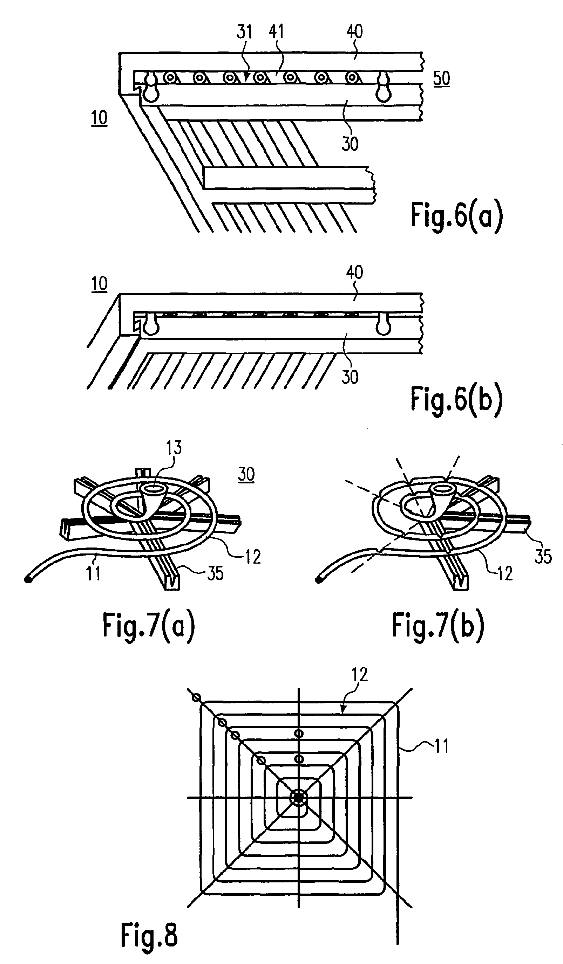

Figur 1 zeigt eine Ausführungsform eines erfindungsgemäßen Trägers 10 mit verschiedenen Varianten von Aufnahmeelementen für mindestens eine Probenkammer in schematischer Seitenansicht. Der Träger 10 besteht aus einem Halterahmen 20 mit einem ersten Rahmenteil 30 (auch: Bodenteil 30) und einem zweiten Rahmenteil 40 (auch: Deckelteil 40). Die Rahmenteile bilden allgemein eine umlaufende, z. B. rechteckige Form, die aus mehreren rechtwinklig zueinander angeordneten Rahmenelementen gebildet ist und/oder eine Sternform mit radial angeordneten Rahmenelementen (Beispiele siehe Figuren 7a, b, 8). In Figur 1 ist zu Illustrationszwecken schematisch ein Ausschnitt des Halterahmens 20 gezeigt. Jedes Rahmenteil 30, 40 besitzt eine Seitenfläche 31, 41, von denen mindestens eine Seitenfläche 31 und/oder 41 zur Bildung von Aufnahmeelementen 21 bis 25 eine Profilierung aufweisen kann. Die Profilierung ist jedoch nicht zwingend vorgesehen (siehe z. B. Figur 6). Die Rahmenteile 30, 40 sind mit Verbindungselementen 50, z. B. in Form von Stiften 51 und Buchsen 52 zusammensetzbar. An einer Seite des Halterahmens können die Rahmenteile 30, 40 verschwenkbar miteinander verbunden sein.

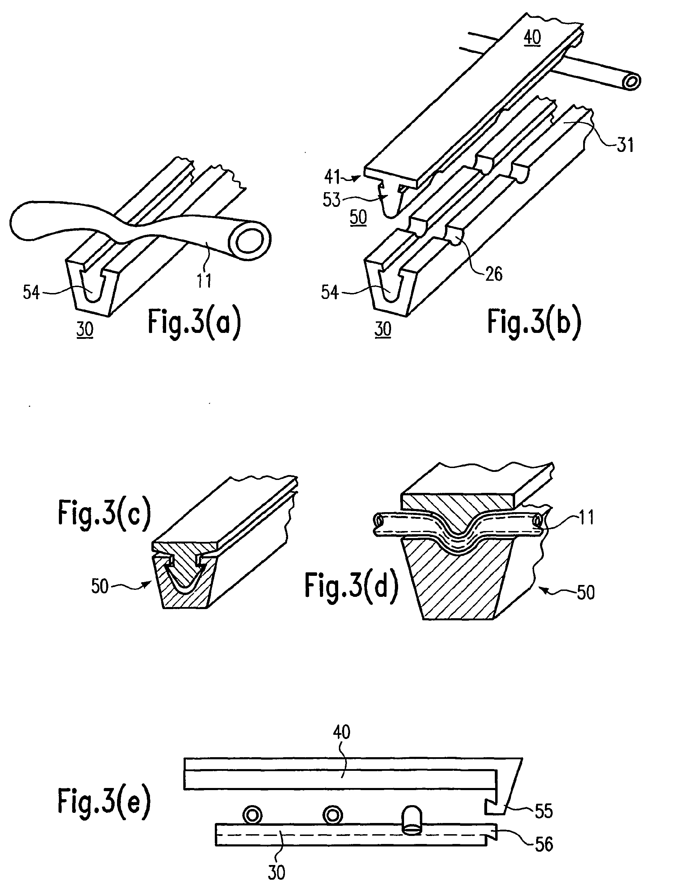

Zur Bildung des Aufnahmeelements 21 mit einem ovalförmigem Querschnitt tragen beide Seitenfläche 31, 41 eine Profilierung mit zueinander ausgerichtete halbovalförmige Ausnehmungen. Alternativ ist bspw. die Seitenfläche 31 des Bodenteils 30 eben ausgebildet und lediglich die Seitenfläche 41 des Deckelteils 40 mit einer Ausnehmung geformt, so dass das Aufnahmeelement 22 mit halbovalförmigem Querschnitt gebildet wird. Analog können Aufnahmeelemente 23, 24 mit dreieckigem, rechteckigem oder schlitzförmigem Querschnitt durch ein- oder beidseitige Profilierung der Seitenflächen 31, 41 gebildet werden. Eine Besonderheit stellt das Aufnahmeelement 25 dar, bei dem die Profilierung zueinander komplementäre Vorsprünge und Ausnehmungen in den Seitenfläche 31, 41 umfasst, die zusätzlich zum Quetschen der gehalterten Probenkammer auch ein Abknicken ermöglichen. Das Aufnahmeelement 25 kann Teil eines Verbindungselements auf der Basis einer Steg-Nut-Kombination sein. Diese in Figur 3 mit weiteren Einzelheiten gezeigte Ausführungsform der Erfindung besitzt den Vorteil, dass die Probenkammer an den Aufnahmeelementen verschlossen wird.

Der Halterahmen 10 besteht vorzugsweise aus einem bei Raumtemperatur elastisch deformierbaren Kunststoffmaterial, z. B. aus PE, TPX, Polysulfon. Er wird vorzugsweise durch ein Spritzgussverfahren hergestellt. Die Dimensionen der Rahmenteile 30, 40 werden anwendungsabhängig gewählt und liegen bspw. im Bereich von einigen cm bis einige dm. Die allgemein rechteckig oder oval gebildeten Aufnahmeelemente besitzen typischerweise Dimensionen, die geringfügig kleiner als die Außenmaße der Probenkammern sind.

Die Figuren 2a, b zeigen vergrößert eine konkrete Ausführungsform des erfindungsgemäße Trägers 10 mit weiteren Einzelheiten. Beide Rahmenteile 30, 40 besitzen auf den Seitenflächen 31, 41 eine wellenförmige Profilierung zur Bildung der Aufnahmeelemente 21. Die Verbindungselemente 50 sind in vorbestimmten Abständen an den Seitenflächen 31, 41 vorgesehen und bestehen aus Stift-Buchsen-Kombinationen 51, 52 mit Einrastprofilen. Im linken Teil von Figur 2a ist eine Gruppe von Probenkammern 11 jeweils undeformiert (vor Zusammensetzen der Rahmenteile 30, 40) und zusammengequetscht (nach der Montage des Haltrahmens) illustriert. In Figur 2b ist der zusammengequetschte Zustand schematisch ohne das obere Rahmenteil 41 gezeigt. Das zwischen den Rahmenteilen zusammengedrückte Material der Probenkammerwände wird vorteilhafterweise breitgequetscht, so dass sich zusätzlich zur Halterung der Probenkammern auch ein lokaler Verschluss und eine Segmentierung in Teilkammern ergibt. Figur 2b zeigt ferner, dass an wenigstens einer der Seitenflächen 31, 41 eine sich in Längsrichtung der Seitenflächen erstreckende Nut 32 vorgesehen sein kann. Die Nut 32 bildet einen Graben, in den das Wandmaterial der Probenkammern ausweichen kann, wie in weiteren Einzelheiten in den Figuren 3a-c illustriert ist.

In den Figuren 3a bis 3e sind verschiedene Varianten von Verbindungselementen 50 illustriert. Die Figuren 3a bis 3c zeigen eine Ausführungsform der Erfindung, bei der als Verbindungselemente 50 an der oberen Seitenfläche 41 des Deckelteils 40 ein Steg 53 mit einem Einrastprofil und am Bodenteil 30 eine Nut 54 mit einem komplementären Einrastprofil vorgesehen sind. Des Weiteren sind an den oberen und unteren Seitenflächen 31, 41 in bestimmten Abständen Ausnehmungen 26 zur Bildung der Aufnahmeelemente vorgesehen (siehe Figur 3b). Figur 3c zeigt die Verbindungselemente 50 im eingerasteten Zustand.

Eine abgewandelte Gestaltung mit steg- und nutförmigen Verbindungselementen 50, die jedoch keine Einrastprofile aufweisen, ist in Figur 3d illustriert. Gemäß einer weiteren Alternative können die Verbindungselemente 50 Kombinationen aus Haken 55 und Vorsprüngen 56 an freien Enden der Rahmenteile 30, 40 umfassen (Figur 3e).

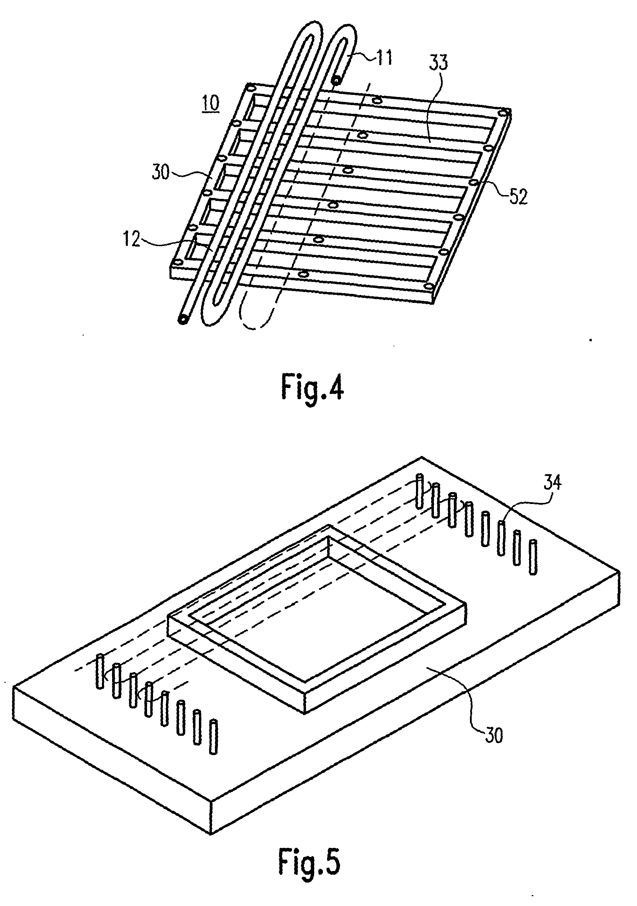

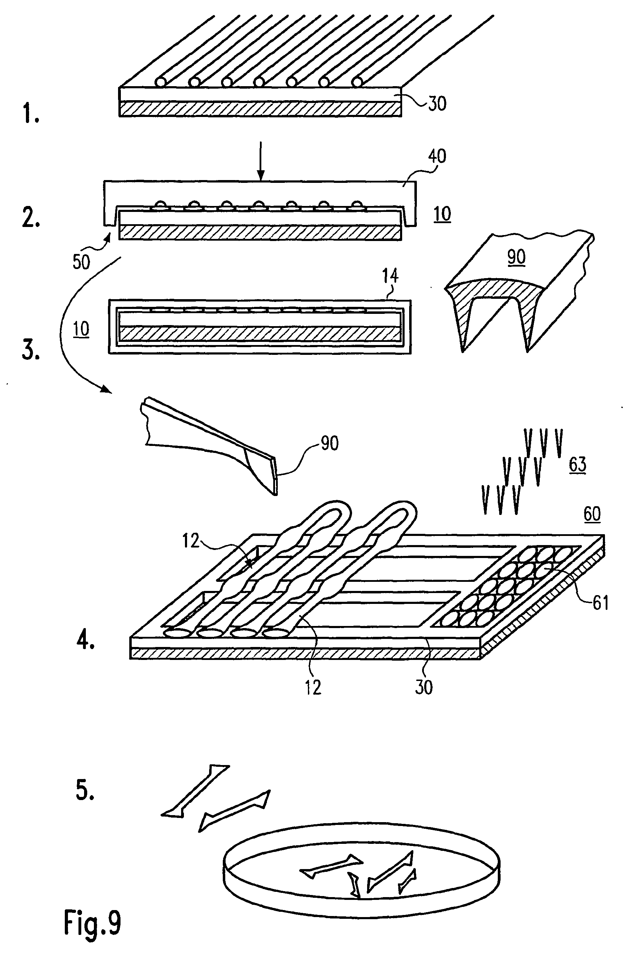

Figur 4 zeigt in perspektivischer Draufsicht das untere Rahmenteil 30 eines erfindungsgemäßen Trägers 10 mit einer schlauchförmigen Probenkammer 11. Das Rahmenteil 30 umfasst neben den äußeren, umlaufenden Rahmenelementen auch innere Rahmenelemente 33, die als Stege ausgebildet sind und ebenfalls obere Seitenflächen mit einer Profilierung entsprechend den oben erläuterten Prinzipien aufweisen. Auf den äußeren und inneren Rahmenelementen sind Buchsen 52 als Verbindungselemente vorgesehen. Die Probenkammer 11 ist mäanderförmig über dem Rahmenteil 30 ausgelegt. Die mäanderförmige Anordnung besitzt den Vorteil, dass ein relativ großes Probenvolumen in einer zunächst durchgehenden Probenkammer aufgenommen und konserviert werden kann. Durch die Halterung am Träger 10 wird die Probenkammer 11 in einzelne Teilkammern oder Kammerabschnitte unterteilt, durch die eine selektive Entnahme von Teilproben vereinfacht wird (siehe Figur 9). Kammerabschnitte sind Teilbereiche einer Probenkammer, die im fixierten Zustand zwischen Rahmenelementen frei verlaufen.

Die Probenkammern 11 bestehen jeweils aus einem flexiblen Schlauch oder einer Kapillare mit einem Innendurchmesser, der wesentlich kleiner als die Länge der Probenkammer ist. Der Innendurchmesser liegt beispielsweise im Bereich von 5 µm bis 4 mm. Die Länge der Probenkammern ist beispielsweise im Bereich von 0.5 cm bis 10 dm gewählt. Der Quotient aus Querschnittsdurchmesser und Länge einer Probenkammer ist vorzugsweise kleiner als 1/10. Die Probenkammern können aus jedem geeigneten inerten und flexiblen Material, z. B. Kunststoff, Polymer oder Metall bestehen. Vorteilhafterweise können miniaturisierte Probenkammern auch aus Materialien mit einer höheren Härte, wie z. B. Glas, Halbleitermaterialien, Kohlenstoff oder Keramik bestehen, die bei geringen Wandstärken elastisch deformierbar sind. Das Wandmaterial der Probenkammern kann je nach den gewünschten Anforderungen für die Kryospeicherung flüssigkeitsdicht oder permeabel ausgebildet sein. Es kann insbesondere ein ionendurchlässiges Material verwendet werden, wie es von Dialyse-Röhrchen bekannt ist. Im Wandmaterial der Probenkammern oder auf dessen Oberfläche können zusätzlich Sensoren (z. B. Temperatursensoren) vorgesehen sein. Die Probenkammern können mit einem entlang ihrer Länge konstanten Durchmesser gebildet sein, der dem Durchmesser der Einlass- und Auslassenden (oder Einlass- und Auslassöffnungen) der Probenkammer entspricht. Bei abgewandelten Ausführungsformen der Erfindung ist entlang der Länge der Probenkammern eine Variation des Innendurchmessers vorgesehen.

Gemäß Figur 5 können am Rahmenteil 30 Spannstifte 34 vorgesehen sein. Die Spannstifte 34 ragen von der oberen Seitenfläche 31 des Bodenteils 30 senkrecht nach oben und sind entsprechend der Position der Aufnahmeelemente ausgerichtet. Die Spannstifte 34 vereinfachen das Auslegen der Mäanderform der Probenkammer. Alternativ kann erfindungsgemäß eine gesonderte Montagevorrichtung vorgesehen sein, in die das zu beschickende Rahmenteil 30 einsetzbar ist und die die Spannstifte trägt.

Die Figuren 6a und 6b zeigen einen erfindungsgemäßen Träger 10 mit eingesetzten Probenkammern 11 ausschnittsweise vor und nach Zusammensetzen der Rahmenteile 30, 40. Bei dieser Ausführungsform der Erfindung sind die Seitenfläche 31, 41 eben und ohne Profilierungen gebildet. Nach dem Positionieren der Probenkammer 11 (z. B. mit Spannstiften gemäß Figur 5) wird das obere Rahmenteil 40 auf die Probenkammern 11 aufgesetzt. Durch Zusammendrücken der vorher lose getrennten Rahmenteile greifen die Verbindungselemente 50 ineinander. Der zusammengesetzte Zustand wird durch die Einrastprofile der Verbindungselemente 50 fixiert, so dass die Probenkammern 11 mit zusammengedrückten Abschnitten relativ zum Träger 10 unbeweglich angeordnet sind (Figur 6b).

Eine alternative Ausführungsform des erfindungsgemäßen Trägers 10 mit radial auseinanderlaufenden Rahmenelementen 35 ist in den Figuren 7a, 7b und 8 illustriert. Die Probenkammer 11 ist schneckenförmig auf den Rahmenelementen 35 des unteren Rahmenteils 30 ausgelegt (oberes Rahmenteil nicht gezeigt). Zwischen den Rahmenelementen 35 werden mit zunehmendem Abstand von der Mitte jeweils längere Kammerabschnitte 12 gebildet. Die Probenkammer 11 besitzt an einem Ende in der Mitte des Trägers eine trichterförmige Erweiterung 13, die aus der Rahmenebene nach oben absteht und der Probenbeschickung dient.

Figur 7a zeigt die ausgelegte Probenkammer 11 vor dem Zusammensetzen des Trägers. Nach dem Zusammensetzen des Trägers und dem Einfriervorgang ergibt sich das Bild gemäß Figur 7b. Zwischen den Kammerabschnitten 12 ist die Probenkammer 11 an den Rahmenelementen 35 zusammengequetscht. Alternativ zur schneckenförmigen Anordnung kann gemäß Figur 8 die Probenkammer 11 in Rechteckform ausgelegt werden, so dass sich geradlinige Kammerabschnitte 12 ergeben.

In Figur 9 ist eine vorteilhafte Schrittfolge bei der Handhabung erfindungsgemäßer Kryospeichervorrichtungen schematisch illustriert. Zunächst erfolgt eine Beschickung der Probenkammer(n). Suspensionsproben werden durch Ausübung eines Unterdruckes oder unter der Wirkung von Kapillarkräften aus Vorratsbehältern, z. B. den Wells einer Titerplatte, in die Probenkammern aufgenommen. Gemäß den Schritten 1 und 2 werden analog zu Figur 6 die gefüllten Probenkammern 11 zwischen den Rahmenteilen ausgelegt und zusammengepresst. Bei dieser Gestaltung bestehen die Verbindungselemente 50 aus seitlichen Haken des oberen Rahmenteils 40. Gemäß Schritt 3 kann eine zusätzliche Versiegelung des Träger-Probenkammern-Verbundes z. B. mit einer Folienumhüllung 14 erfolgen. In diesem Zustand erfolgt der Einfriervorgang und die Lagerung im gefrorenen (kryokonservierten) Zustand. Die Kryospeichervorrichtung wird in eine Umgebung mit reduzierter Temperatur überführt. Diese Umgebung ist beispielsweise in einem Kryobehälter mit flüssigem Stickstoff oder mit gasförmigem Stickstoff bei T = - 120°C gegeben.

Zur Entnahme von Proben durch Abtrennung von Kammerabschnitten 12 nach oder während der Kryokonservierung werden gemäß Schritt 4 die gewünschten Kammerabschnitte mechanisch mit einem Schneidwerkzeug 90 abgetrennt. Das Schneidwerkzeug kann ein- oder zweischneidig gebildet sein (siehe Einschub) . Die Kammerabschnitte 12 werden unmittelbar an die Aufnahmeelemente am Halterahmen 20 angrenzend abgeschnitten. Dadurch besitzen die Enden der abgetrennten Kammerabschnitte 12 eine von der kreisrunden Querschnittsform abweichende Deformation, wie schematisch bei Schritt 5 gezeigt ist. Die gefrorenen Kammerabschnitte können bspw. in einer Schale weiter im kryokonservierten Zustand aufbewahrt werden. Vorteilhafterweise bleiben die Deformationen an den Enden der Kammerabschnitte erhalten, solange der Kryozustand gegeben ist.

Die Entnahme von Proben kann alternativ derart erfolgen, dass die gesamte Kryospeichervorrichtung aufgetaut und der Inhalt der mindestens einen Probenkammer entnommen wird. Dies erfolgt beispielsweise durch Anlagen eines Unterdruckes an eines der Enden der mindestens einen Probenkammer.

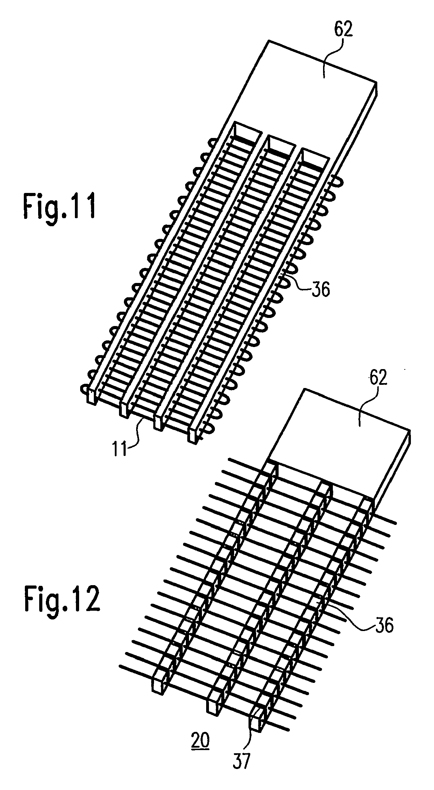

Bei Schritt 4 der Figur 9 ist ein weiterer wichtiger Gesichtspunkt der Erfindung illustriert. Vorteilhafterweise kann der Träger 10 mit einer Datenspeichereinrichtung 60 verbunden sein. Die Datenspeichereinrichtung 60 enthält mindestens einen Datenspeicher 61, der vorzugsweise in einem Gehäuse 62 (siehe Figur 11) angeordnet ist. Der Datenspeicher 61 besitzt eine Schnittstelle zur zumindest zeitweiligen Aufnahme einer Steckverbindung 63 mit elektrischen Verbindungsleitungen, über die der Datenspeicher 61 mit einer Steuereinrichtung (nicht dargestellt) verbunden werden kann.

Als Datenspeicher 61 kann ein an sich bekannter Speicherchip vorgesehen sein; in dem anwendungsabhängig beliebige Daten elektrisch oder magnetisch gespeichert sind. Es wird beispielsweise ein sogenannter Flash-Speicher verwendet. In der Datenspeichereinrichtung 60 kann auch ein optischer Speicher vorgesehen sein. In den Datenspeicher werden Daten zur Charakterisierung der aufgenommenen Suspensionsproben eingeschrieben. Diese Daten umfassen beispielsweise bei medizinischen Anwendungen I-dentifizierungsdaten zur Bestimmung des Spenders und der Arten der suspendierten Zellen, weitere Merkmale des Spenders, wie z. B. die Blutgruppe, ggf. relevante Literaturdaten zu den suspendierten Zelltypen und ggf. bereits vorliegende Messdaten und/oder Bilddaten. Die Bilddaten umfassen beispielsweise licht- oder elektronenmikroskopische Abbildungen von suspendierten Zellen, die der spenderspezifischen Charakterisierung der Zellen und späteren Vergleichen dienen. Die gespeicherten Daten werden während der Kryospeicherung abgerufen und/oder ergänzt.

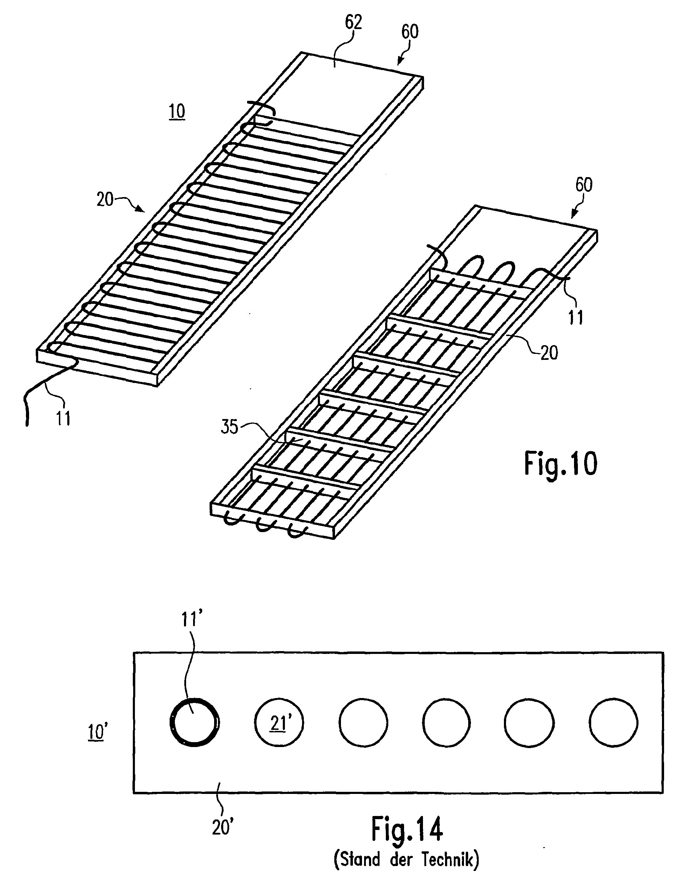

Alternative Gestaltungen des erfindungsgemäßen Trägers 10 mit dem Halterahmen 20 und der Datenspeichereinrichtung 60 sind in den Figuren 10 bis 12 gezeigt. Das Gehäuse 62 der Datenspeichereinrichtung 60 ist vorzugsweise einstückig mit dem Material des Halterahmens 10 gebildet. Der Halterahmen 20 ist durch umlaufende Rahmenelemente gemäß Figur 10 geschlossen gebildet. Alternativ sind gemäß den Figuren 11 und 12 stabförmige Rahmenelemente 36 vorgesehen, die sich vom Gehäuse 62 des Datenspeichers erstrecken. Jedes Rahmenelement 36 enthält eine Reihe von Aufnahmeelementen, in denen die mindestens eine Probenkammer 11 fixiert ist. Es kann beispielsweise eine einzige Probenkammer vorgesehen sein, die mäanderförmig durch alle Rahmenelemente 36 durchgezogen und im ausgelegten oder aufgespannten Zustand fixiert wird. Alternativ können auch mehrere, getrennte Probenkammern vorgesehen sein, wie es in Figur 12 illustriert ist. Der Halterahmen 20 kann zur Abtrennung von Teilen der Probenkammer(n), z. B. in Form von Sollbruchstellen 37, aufweisen.

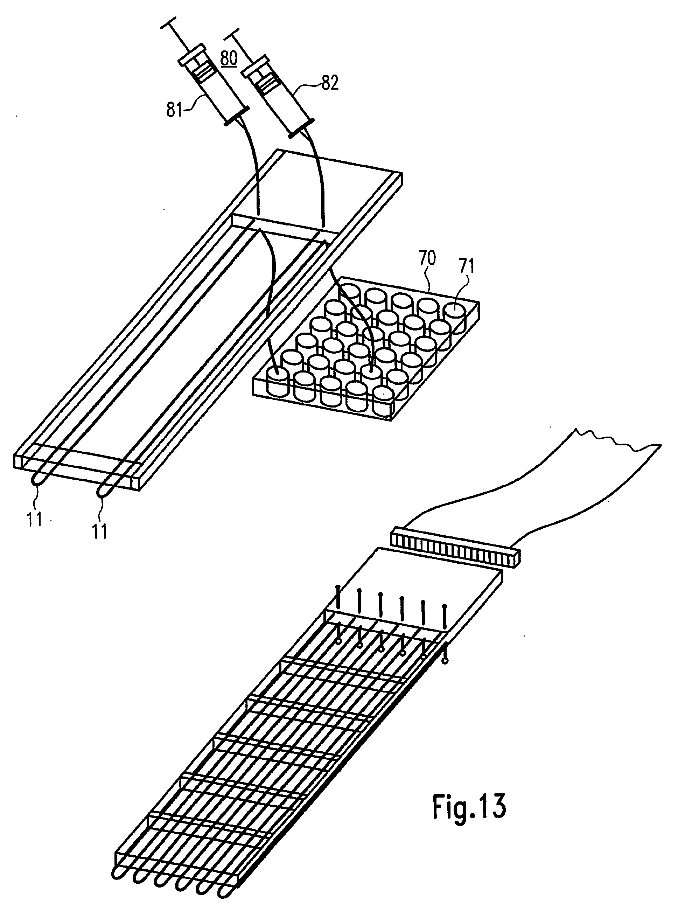

Figur 13 illustriert eine Ausführungsform der Erfindung, bei der zwei Probenkammern 11 vorgesehen sind, die mit verschiedenen _ Suspensionsproben beschickt werden. In der Praxis kann die Zahl der zu einer Kryospeichervorrichtung gehörenden Probenkammern erheblich größer und insbesondere in Abhängigkeit von der Gestalt des Probenreservoirs 70 gewählt sein. Das Probenreservoir 70 wird beispielsweise durch eine Mikro- oder Nanotiterplatte mit einer Vielzahl von Kompartimenten 71 gebildet. Die Einlassöffnungen der Probenkammern 11 ragen jeweils in eines der Kompartimente.

Zur Beschickung der Probenkammern sind die schematisch gezeigten Rahmenteile noch nicht zusammengesetzt. Die Suspensionsproben werden in die Probenkammern gesogen. Zur Parallelbeschickung umfasst die Saugeinrichtung 80 mehrere Flüssigkeitspipetten 81, 82, ... entsprechend der Zahl der zu beschickenden Probenkammern. Alternativ kann die Beschickung der Probenkammern jedoch auch sequentiell mit einer einzelnen Flüssigkeitspipette 81 erfolgen.

Nach der Beschickung werden die Rahmenteile zusammengesetzt, um die Probenkammer(n) zu fixieren. Die einerseits zum Probenreservoir 70 und andererseits zur Saugeinrichtung 80 führenden Enden der Probenkammern werden abgeschnitten. Dieser Zustand ist schematisch in Figur 13 (unten) illustriert. Die verschlossenen Enden sind ggf. für einen späteren Zugriff auf den Inhalt der Probenkammer frei zugänglich.

Die in der vorstehenden Beschreibung, den Ansprüchen und den Zeichnungen offenbarten Merkmale der Erfindung können sowohl einzeln oder auch in Kombination für die Verwirklichung der Erfindung in ihren verschiedenen Ausgestaltungen von Bedeutung sein.

## Patentansprüche

1. Träger (10) für mindestens eine Probenkammer (11), insbesondere für die Kryokonservierung biologischer Proben, der einen Halterahmen (20) umfasst, der zur Positionierung der Probenkammer (11) eingerichtet ist, wobei der Halterahmen (20) ein erstes Rahmenteil (30) und ein zweites Rahmenteil (40) aufweist, die mit Verbindungselementen (50) lösbar zusammengesetzt werden können und sich im zusammengesetzten Zustand jeweils an Seitenflächen (31, 41) berühren, wobei durch eine an mindestens einer der Seitenflächen (31, 41) vorgesehene Profilierung Aufnahmeelemente (21 - 26) gebildet werden,
**dadurch gekennzeichnet, dass**
die Aufnahmeelemente (21 - 26) im zusammengesetzten Zustand der Rahmenteile Durchgangslöcher durch den Halterahmen (20) bilden und einen Freiraum zur Aufnahme der Probenkammer lassen, wobei die Probenkammer (11) im zusammengesetzten Zustand der Rahmenteile (30, 40) zwischen den Seitenflächen (31, 41) zusammendrückbar und relativ zum Halterahmen unbeweglich fixierbar ist.

2. Träger nach Anspruch 1, bei dem eine der Seitenflächen (31) eben ist und die jeweils andere Seitenfläche (42) die Profilierung aufweist, so dass zwischen den Seitenflächen (31, 41) die Aufnahmeelemente (21 - 26) gebildet werden.

3. Träger nach Anspruch 1, bei dem beide Seitenflächen (31, 41) die Profilierung aufweisen, so dass zwischen den Seitenflächen (31, 41) die Aufnahmeelemente (21 - 26) gebildet werden.

4. Träger nach einem der vorhergehenden Ansprüche, bei dem die Aufnahmeelemente (21 - 26) einen ovalen, dreieckigen, rechteckigen oder schlitzförmigen Querschnitt besitzen.

5. Träger nach einem der vorhergehenden Ansprüche, bei dem die Verbindungselemente (50) zusammenpassende Stege und Nuten und/oder Stifte und Buchsen an den Seitenflächen umfassen.

6. Träger nach Anspruch 5, bei dem die Stege, Nuten, Stifte und/oder Buchsen Einrastprofile aufweisen.

7. Träger nach einem der vorhergehenden Ansprüche, bei dem eines der Rahmenteile (30) an seiner Außenseite Spannstifte (34) aufweist, die jeweils in Bezug auf die Aufnahmeelemente so ausgerichtet sind, dass ein Aufspannen der Probenkammer (11) auf dem Rahmenteil (30) ermöglicht wird.

8. Träger nach einem der vorhergehenden Ansprüche, bei dem die Rahmenteile (30, 40) an einer Seite verschwenkbar miteinander verbunden sind.

9. Träger nach einem der vorhergehenden Ansprüche, bei dem die Rahmenteile jeweils äußeren Rahmenelemente aufweisen, die eine rechteckige Form des Halterahmens (20) bilden.

10. Träger nach Anspruch 9, bei dem die Rahmenteile mit inneren Rahmenelementen ausgestattet sind, die im zusammengesetzten Zustand ebenfalls Aufnahmeelemente bilden, in denen die eingesetzte Probenkammer (11) fixierbar ist.

11. Träger nach einem der vorhergehenden Ansprüche 1 bis 8, bei dem die Rahmenteile jeweils aus Rahmenelementen (35) bestehen, die eine radial auseinander laufende Sternform bilden.

12. Träger nach einem der vorhergehenden Ansprüche, der mit einer Datenspeichereinrichtung (60) mit mindestens einem Datenspeicher (61) verbunden ist.

13. Kryospeichervorrichtung, die einen Träger (10) nach einem der vorhergehenden Ansprüche und mindestens eine Probenkammer (11) aus einem flexiblen, elastisch deformierbaren Material umfasst.

14. Kryospeichervorrichtung nach Anspruch 13, bei der die mindestens eine Probenkammer (11) die Form eines Hohlzylinders, Hohlkonus, Rohres, Schlauches, Kanals oder einer Hohlnadel besitzt.

15. Verfahren zur Speicherung mindestens einer Suspensionsprobe in einem Tieftemperaturzustand, mit den Schritten:
- Aufnahme der mindestens einen Suspensionsprobe in mindestens eine Probenkammer (11) aus einem flexiblen, elastisch deformierbaren Material,
- Halterung der Probenkammer (11) in einem Träger (10) nach einem der vorhergehenden Ansprüche 1 bis 13, wobei die Probenkammer (11) zwischen den Rahmenteilen (30, 40) fixiert wird, und
- Überführung der Suspensionsprobe in einen Tieftemperaturzustand durch Positionieren des Trägers (10) mit der Probenkammer (11) in einem Kryomedium.

16. Verfahren gemäß Anspruch 15, bei dem die Aufnahme der mindestens einen Suspensionsprobe in die mindestens eine Probenkammer durch Eintauchen der mindestens einen Probenkammer (11) mit jeweils einem Einlassende in ein Probenreservoir (70) und Überführung der Suspensionsprobe unter der Wirkung eines an dem entsprechenden Auslassende ausgeübten Unterdruckes oder von Kapillarkräften erfolgt.

17. Verfahren gemäß einem der Ansprüche 15 oder 16, bei dem von der mindestens einen Probenkammer (11) im Tieftemperaturzustand mindestens eine Teilprobe durch mechanische Abtrennung abgelöst wird.

18. Verfahren gemäß Anspruch 17, bei dem die mechanische Abtrennung ein an die Rahmenelemente des Trägers (10) angrenzendes Abschneiden von Kammerabschnitten (12) der Probenkammer (11) umfasst.

## Claims

1. Carrier (10) for at least one sample chamber (11), in particular for the cryopreservation of biological samples, which comprises a holding frame (20) which is provided for positioning the sample chamber (11), the holding frame (20) having a first frame part (30) and a second frame part (40), which can be assembled detachably with connecting elements (50) and are in contact, in the assembled state, respectively on lateral faces (31, 41), receiving elements (21 - 26) being formed by a profiling provided on at least one of the lateral faces (31, 41),
**characterised in that**
the receiving elements (21 - 26), in the assembled state of the frame parts, form through-holes through the holding frame (20) and leave a free space for receiving the sample chamber, the sample chamber (11), in the assembled state of the frame parts (30, 40), being able to be pressed together between the lateral faces (31, 41) and being able to be fixed immovably relative to the holding frame.

2. Carrier according to claim 1, in which one of the lateral faces (31) is flat and the respectively other lateral face (42) has the profiling so that the receiving elements (21 - 26) are formed between the lateral faces (31, 41).

3. Carrier according to claim 1, in which both lateral faces (31, 41) have the profiling, so that the receiving elements (21 - 26) are formed between the lateral faces (31, 41).

4. Carrier according to one of the preceding claims, in which the receiving elements (21 - 26) have an oval, triangular, rectangular or slot-shaped cross-section.

5. Carrier according to one of the preceding claims, in which the connecting elements (50) comprise mutually adapted webs and grooves and/or pins and bushes on the lateral faces.

6. Carrier according to claim 5, in which the webs, grooves, pins and/or bushes have snap-in profiles.

7. Carrier according to one of the preceding claims, in which one of the frame parts (30) has dowel pins (34) on its outer side, which are aligned respectively relative to the receiving elements such that clamping of the sample chamber (11) on the frame part (30) is made possible.

8. Carrier according to one of the preceding claims, in which the frame parts (30, 40) are connected to each other pivotably on one side.

9. Carrier according to one of the preceding claims, in which the frame parts have respectively outer frame elements which form a rectangular shape of the holding frame (20).

10. Carrier according to claim 9, in which the frame parts are equipped with inner frame elements which, in the assembled state, likewise form receiving elements in which the inserted sample chamber (11) can be fixed.

11. Carrier according to one of the preceding claims 1 to 8, in which the frame parts respectively comprise frame elements (35) which form a radially diverging star shape.

12. Carrier according to one of the preceding claims, which is connected to a data storage mechanism (60) having at least one memory (61).

13. Cryostorage device which comprises a carrier (10) according to one of the preceding claims and at least one sample chamber (11) made of a flexible, elastically deformable material.

14. Cryostorage device according to claim 13, in which the at least one sample chamber (11) has the shape of a hollow cylinder, hollow cone, pipe, hose, channel or a cannula.

15. Method for storing at least one suspension sample in a low temperature state, having the steps:
- receiving the at least one suspension sample in at least one sample chamber (11) made of a flexible, elastically deformable material,
- mounting the sample chamber (11) in a carrier (10) according to one of the preceding claims 1 to 13, the sample chamber (11) being fixed between the frame parts (30, 40), and
- transferring the suspension sample into a low temperature state by positioning the carrier (10) with the sample chamber (11) in a cryomedium.

16. Method according to claim 15, in which reception of the at least one suspension sample in the at least one sample chamber is effected by means of immersing the at least one sample chamber (11) by respectively an inlet end into a sample reservoir (70) and transfer of the suspension sample is effected under the effect of a low pressure exerted on the corresponding outlet end or by capillary forces.

17. Method according to one of the claims 15 or 16, in which at least one partial sample is released by mechanical separation from the at least one sample chamber (11) in the low temperature state.

18. Method according to claim 17, in which the mechanical separation comprises cutting off chamber portions (12) of the sample chamber (11) which abut on the frame elements of the carrier (10).

## Revendications

1. Support (10) pour au moins une chambre à échantillons (11) servant notamment à la cryoconservation d'échantillons biologiques, comprenant un cadre de maintien (20) équipé pour le positionnement de la chambre à échantillons (11), ledit cadre de maintien (20) comportant une première pièce de cadre (30) et une deuxième pièce de cadre (40) pouvant être assemblées de manière amovible avec des éléments de jonction (50) et se contactant entre elles par des surfaces latérales (31, 41) en état d'assemblage, des éléments de réception (21 - 26) étant formés par profilage prévu sur au moins une des surfaces latérales (31, 41),
**caractérisé en ce que**
les éléments de réception (21 - 26) forment des trous passants dans le cadre de maintien (20) en état d'assemblage des pièces de cadre et laissent un espace libre pour le logement de la chambre à échantillons, la chambre à échantillons (11) pouvant être serrée entre les surfaces latérales (31, 41) en état d'assemblage des pièces de cadre (30, 40), et fixée sans mobilité relativement au cadre de maintien.

2. Support selon la revendication 1, où l'une des surfaces latérales (31) est plane et où l'autre surface latérale (41) est profilée, de manière à former les éléments de réception (21 - 26) entre les surfaces latérales (31, 41).

3. Support selon la revendication 1, où les deux surfaces latérales (31, 41) sont profilées, de manière à former les éléments de réception (21 - 26) entre les surfaces latérales (31, 41).

4. Support selon l'une des revendications précédentes, où les éléments de réception (21 - 26) présentent une section ovale, triangulaire, rectangulaire ou en forme de fente.

5. Support selon l'une des revendications précédentes, où les éléments de jonction (50) comprennent des nervures et des rainures, et/ou des goupilles et des prises femelles correspondantes sur les surfaces latérales.

6. Support selon la revendication 5, où les nervures, les rainures, les goupilles et/ou les prises femelles présentent des profils d'enclenchement.

7. Support selon l'une des revendications précédentes, où l'une des pièces de cadre (30) comporte des goupilles de serrage (34) sur son côté extérieur, respectivement orientées relativement aux éléments de réception de manière à permettre un serrage de la chambre à échantillons (11) sur la pièce de cadre (30).

8. Support selon l'une des revendications précédentes, où les pièces de cadre (30, 40) sont raccordées de manière à pouvoir pivoter sur un côté.

9. Support selon l'une des revendications précédentes, où les pièces de cadre comportent chacune des éléments de cadre extérieurs donnant une forme rectangulaire au cadre de maintien (20).

10. Support selon la revendication 9, où les pièces de cadre sont pourvues d'éléments de cadre intérieurs formant également des éléments de réception en état d'assemblage, dans lesquels la chambre à échantillons (11) introduite est fixable.

11. Support selon l'une des revendications 1 à 8, où les pièces de cadre se composent chacune d'éléments de cadre (35) donnant une forme en étoile dont les branches s'écartent radialement.

12. Support selon l'une des revendications précédentes, relié à au moins une mémoire de données (61) par un dispositif de mémoire de données (60).

13. Dispositif de cryoconservation, comprenant un support (10) selon l'une des revendications précédentes et au moins une chambre à échantillons (11) en matériau flexible et élastiquement déformable.

14. Dispositif de cryoconservation selon la revendication 13, où le ou les chambres à échantillons (11) présentent la forme d'un cylindre creux, d'un cône creux, d'un conduit, d'un tuyau, d'une canalisation ou d'une aiguille creuse.

15. Procédé de conservation en état de basse température d'au moins un échantillon en suspension, comprenant les étapes suivantes :
- logement de l'échantillon ou des échantillons en suspension dans au moins une chambre à échantillons (11) en matériau flexible et élastiquement déformable,
- fixation de la chambre à échantillons (11) dans un support (10) selon l'une des revendications 1 à 13, la chambre à échantillons (11) étant fixée entre les pièces de cadre (30, 40), et
- amenée en état de basse température de l'échantillon en suspension par positionnement du support (10) avec la chambre à échantillons (11) dans un agent cryogénique.

16. Procédé selon la revendication 15, où le logement de l'échantillon ou des échantillons en suspension dans la ou les chambres à échantillons est exécutée par plongée de la ou des chambres à échantillons (11) par une extrémité d'admission dans un réservoir à échantillons (70) et par exposition de l'échantillon en suspension aux effets d'une dépression appliquée sur l'extrémité d'admission correspondante, ou de forces de capillarité.

17. Procédé selon l'une des revendications 15 ou 16, où au moins un échantillon partiel est séparé par moyens mécaniques de la ou des chambres à échantillons (11) en état de basse température.

18. Procédé selon la revendication 17, où la séparation mécanique comprend une découpe de parties de chambre (12) de la chambre à échantillons (11), contiguë aux éléments de cadre du support (10).
